# EUROPEAN PATENT APPLICATION

(11) **EP 1 675 419 A1**
(43) Date of publication of application: **28.06.2006**
(21) Application number: 05251776.0
(22) Date of filing: 23.03.2005
(51) Int. Cl.: H04Q 7/32

(54) **Mobile terminal control program and mobile terminal equipment**

(30) Priority: 22.12.2004 JP 2004370814
(71) Applicant: FUJITSU LIMITED, Kawasaki-shi, Kanagawa 211-8588 (JP)
(72) Inventor: Suematsu, Takashi, c/o Fujitsu Limited, Kawasaki-shi Kanagawa 211-8588 (JP)
(74) Representative: Stebbing, Timothy Charles

(57) **Abstract**

A mobile terminal equipment (1) is operable to automatically select an appropriate communication channel, depending on the state of its battery. When the mobile terminal equipment enters the service area of a wireless LAN (2), a wireless-LAN service area determination section (1c) obtains wireless-LAN radio strength from a call-via-wireless-LAN section (1a). If the radio strength is not lower than a certain level, it is determined that the equipment (1) has entered the service area. Then, a communication channel selection section (1e) obtains the remaining battery power from a battery management circuit (1d), and selects a terminating communication channel in accordance with the remaining battery power. If the communication channel selection section (1e) selects a communication channel through the wireless LAN (2), a routing setup request section (1f) gives a channel-routing-setup management unit (3b) a routing setup request to route an incoming call directed to the mobile equipment (1) through a wireless telephone network (3) to a communication channel through the wireless LAN (2).

## Description

The present invention relates to mobile terminal equipment and mobile terminal control programs for controlling the mobile terminal equipment, and particularly to mobile terminal equipment including a call-via-wireless-LAN section having a function to call through a wireless local area network (LAN) and a call-via-wireless-telephone-network section having a function to call through a wireless telephone network and a mobile terminal control program for controlling the mobile terminal equipment.

The use of Voice over Internet Protocol (VoIP) technology for making a voice call on the Internet or on intranets has been spreading recently. The VoIP allows audio information to be transmitted across a computer network utilizing a data communication protocol and enables a voice call between terminals. The VoIP can be applied to any network using a certain data communication protocol, regardless of whether the network is wired or wireless.

A wireless Internet Protocol (IP) telephone set can be provided by incorporating a function of data communication through a wireless local area network (LAN). The wireless IP telephone set permits a phone call to be placed through an access point of the wireless LAN. If a roaming function is implemented, the wireless IP telephone set further permits a phone call to be placed on the move between access points (refer to Japanese Unexamined Patent Publication No. 2002-125069, for instance).

These functions of the wireless IP telephone can also be incorporated into a wireless telephone set used to place a call through wireless telephone networks such as a mobile phone network and a Personal Handyphone System network in Japan. The user can start a call by selecting either a wireless telephone network or a wireless LAN as desired. This also applies to a personal digital assistant or personal data assistant (PDA) which supports the wireless LAN functions including the wireless IP telephone functions and incorporates the communication functions of the mobile phone or PHS phone. An apparatus having a function to place a voice call through a wireless telephone network or a wireless LAN will be hereafter referred to as mobile terminal equipment.

The VoIP can also be used on wireless telephone networks for mobile phones, PHS phones, and others. The use of the VoIP on a wireless telephone network for mobile phones, PHS phones, or the like, however, may cause interruptions in the conversation or may generate a large delay, because the network has a narrow band. Accordingly, selection should be made when a phone call is placed: For instance, the VoIP is used when a wide-band network such as a wireless LAN is connected for a phone call and the VoIP is not used when a narrow-band wireless telephone network for mobile phones, PHS phones, or the like is connected. The user should select the VoIP call function or the call-via-a-wireless-telephone network function in accordance with the communication conditions, before starting a call.

When the mobile terminal equipment receives a call from another telephone set, the other party cannot know the radio conditions of the wireless LAN of the mobile terminal equipment. The communication conditions can always vary because the mobile terminal equipment is movable. The present applicant noticed that communication through the wireless LAN is inexpensive but power-hungry in the standby state, and filed a patent application on using a telephone channel in the standby state and receiving an incoming call through the wireless LAN when the connection conditions are good (Japanese Patent Application No. 2004-181575).

The channel to be used for a phone call need not be determined just by the communication conditions of the wireless LAN. For instance, if the battery is weak while the wireless LAN is in a good communication state, a phone call may be received through a wireless telephone channel so that the battery will last longer, assuming that the wireless telephone channel consumes less power.

In view of the foregoing, it is desirable to provide a mobile terminal control program and mobile terminal equipment for allowing an appropriate communication channel to be automatically selected in accordance with the state of a battery such as a current level of charge or a remaining battery life/capacity.

According to a first aspect of the present invention, there is provided a mobile terminal control program for controlling a mobile terminal equipment including a call-via-wireless-LAN section having a function to call through (communicate via) a wireless LAN and a call-via-wireless-telephone-network section having a function to call through (communicate via) a wireless telephone network. This mobile terminal control program causes a computer in the mobile terminal equipment to serve as a wireless-LAN service area determination section which obtains wireless-LAN radio strength information indicating the strength of radio waves sent by (i.e. received signal strength from) an access point of a wireless LAN from the call-via-wireless-LAN section, and determines that the equipment has entered the service area of the wireless LAN if the wireless-LAN radio strength information indicates that the signal strength is higher than or equal to a certain level; a communication channel selection section which obtains remaining battery level information of the current battery level (or remaining battery life) from a battery management circuit for managing the battery if the wireless-LAN service area determination section determines that the equipment has entered the service area of the wireless LAN, and selects a communication channel through the wireless LAN as a terminating (receiving) communication channel if the current battery level information indicates that the current battery level is higher than or equal to a certain level; and a routing setup request section which provides a unit for managing a channel routing setup with a routing setup request for routing an incoming call directed at a telephone number of the mobile terminal equipment for communication through the wireless telephone network to a communication channel through the wireless LAN if the communication channel selection section selects the communication channel through the wireless LAN.

According to a second aspect of the present invention, there is provided mobile terminal equipment. This mobile terminal equipment includes the following elements: a call-via-wireless-LAN section having a function to call through a wireless LAN; a call-via-wireless-telephone-network section having a function to call through a wireless telephone network; a wireless-LAN service area determination section which obtains wireless-LAN radio strength information indicating the strength of radio waves sent by an access point of a wireless LAN from the call-via-wireless-LAN section, and determines that the equipment has entered the service area of the wireless LAN if the wireless-LAN radio strength information indicates that the signal strength is higher than or equal to a certain level; a communication channel selection section which obtains current battery level (or remaining battery life) information from a battery management circuit for managing the battery if the wireless-LAN service area determination section determines that the equipment has entered the service area of the wireless LAN, and selects a communication channel through the wireless LAN as a terminating communication channel if the current battery level information indicates that the current battery level is higher than or equal to a certain level; and a routing setup request section which provides a unit for managing a channel routing setup with a routing setup request for routing an incoming call directed at the mobile terminal for communication through the wireless telephone network to a communication channel through the wireless LAN if the communication channel selection section selects the communication channel through the wireless LAN.

The above and other features and advantages of the present invention will become apparent from the following description when taken in conjunction with the accompanying drawings which illustrate preferred embodiments of the present invention by way of example, and in which:
FIG. 1 shows an overview of an embodiment.
FIG. 2 shows one system configuration of this embodiment.
FIG. 3 shows the concept of terminating channel setup processing.
FIG. 4 shows channel connection processing to be performed when an incoming call is received.
FIG. 5 shows a hardware configuration of mobile terminal equipment.
FIG. 6 is a block diagram showing the functions of the mobile terminal equipment.
FIG. 7 is a flow chart showing terminating channel determination processing.
FIG. 8 is a flow chart showing originating channel determination processing.

An embodiment of the present invention will be described below with reference to the drawings.

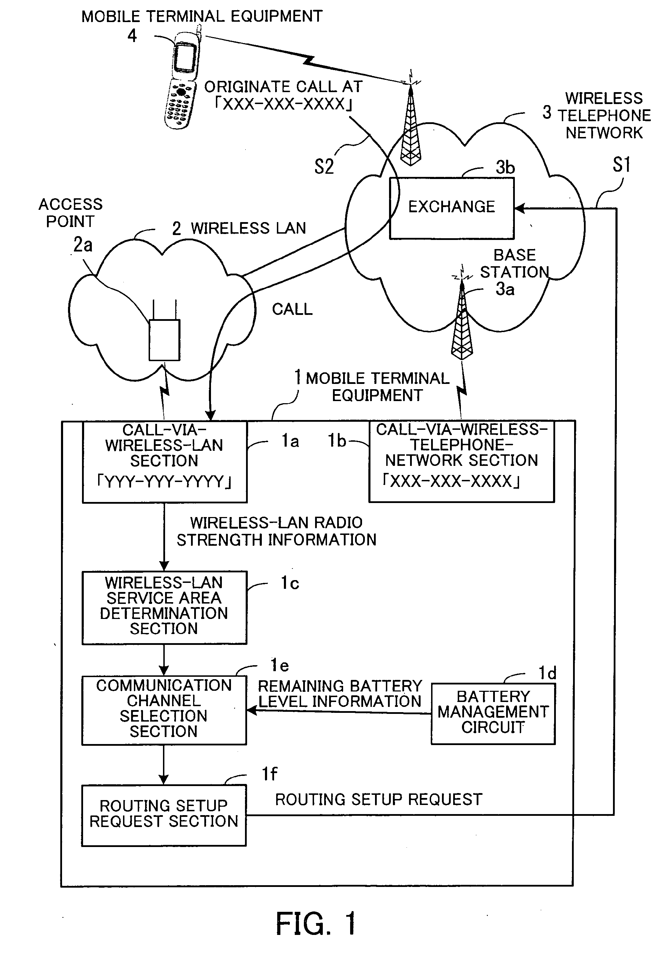

FIG. 1 shows an overview of the embodiment. As shown in the figure, mobile terminal equipment 1 includes a call-via-wireless-LAN section 1a, a call-via-wireless-telephone-network section 1b, a wireless-LAN service area determination section 1c, a battery management circuit 1d, a communication channel selection section 1e, and a routing setup request section 1f.

The call-via-wireless-LAN section 1a has a function to start (initiate) a VoIP call through a wireless LAN 2. The call function includes a function to detect and express in numerical form the strength of radio waves from an access point 2a of the wireless LAN 2. The call-via-wireless-LAN section 1a outputs a value representing the strength of radio waves from the access point 2a as wireless-LAN radio strength information.

The call-via-wireless-telephone-network section 1b communicates with a base station 3a of a wireless telephone network 3 such as a mobile phone network and a PHS communication network and has a function to call through (communicate by) the wireless telephone network 3.

The wireless-LAN service area determination section 1c obtains the wireless-LAN radio strength information representing the strength of radio waves sent by the access point 2a of the wireless LAN 2 from the call-via-wireless-LAN section 1a, and determines that the equipment has entered the service area of (is able to communicate through) the wireless LAN 2 if the wireless-LAN radio strength information (value) exceeds a certain level or a predetermined threshold.

The battery management circuit 1d manages the battery. To be more specific, the battery management circuit 1d measures and expresses the remaining battery level (capacity or lifetime) in numerial form, and outputs a value representing the current battery level or the remaining battery life as "remaining battery level information".

The communication channel selection section 1e obtains the remaining battery level information from the battery management circuit 1d when the wireless-LAN service area determination section 1c determines that the equipment has entered the service area of the wireless LAN 2. If the remaining battery level information indicates that the remaining battery level is higher than or equal to a certain (threshold) level, the communication channel selection section 1e selects a communication channel through the wireless LAN 2 as a terminating (receiving) communication channel.

When the communication channel selection section 1e selects the communication channel through the wireless LAN 2, the routing setup request section 1f provides a unit for managing a channel routing setup, such as an exchange 3b shown in FIG. 1, with a routing setup request to route an incoming call directed at a telephone number (of the mobile terminal) for communication through the wireless telephone network 3 to the communication channel through the wireless LAN 2.

With the mobile terminal equipment described above, the wireless-LAN service area determination section 1c obtains wireless-LAN radio strength information from the call-via-wireless-LAN section 1a when the mobile terminal equipment 1 enters the service area of a wireless LAN, and determines that the equipment has entered the service area of the wireless LAN 2 when the wireless-LAN radio strength information indicates that the radio strength exceeds a minimum level. Then, the communication channel selection section 1e obtains remaining battery level information indicating the remaining battery level from the battery management circuit 1d and selects a terminating communication channel in accordance with the remaining battery level information. If the communication channel selection section 1e selects a communication channel through the wireless LAN 2, the routing setup request section 1f provides a (external) unit for managing the channel routing setup, such as the exchange 3b, with a routing setup request to route an incoming call directed at a telephone number for communication through the wireless telephone network 3 to the communication channel through the wireless LAN 2 (step S1).

In response to the routing setup request, the exchange 3b internally specifies that an incoming call directed at a phone number XXX-XXX-XXXX of the call-via-wireless-telephone-network section 1b be routed to a phone number YYY-YYY-YYYY of the call-via-wireless-LAN section 1a. Then, if mobile terminal equipment 4 makes a call to a phone number XXX-XXX-XXXX, the exchange 3b routes the call to the call-via-wireless-LAN section 1a (step S2).

Now, an appropriate terminating channel can be selected, depending on the radio conditions of the wireless LAN and the remaining battery level. If the equipment enters the service area of the wireless LAN 2, the equipment can receive a call through the wireless LAN 2 after that. The call through the wireless LAN 2, however, consumes a greater power than a call through a wireless telephone network such as a mobile phone network or a PHS communication network. While the battery is weak, the talk time is shorter and the possibility of the battery becoming exhausted before being charged or exchanged would be higher when a call is placed through the wireless LAN 2 than when a call is placed through the wireless telephone network. Accordingly, while the remaining battery level is low, an incoming call is not routed through the wireless LAN and is received through the wireless telephone network even if the equipment is in the service area of the wireless LAN. By doing this, the battery lasts longer, and the talk time can be extended.

Supposing that a mobile phone network is used as a wireless phone network, the embodiment will be described in further detail.

FIG. 1 illustrates how a terminating communication channel is selected. This embodiment also allows the mobile terminal equipment to automatically select an originating communication channel in accordance with the radio strength of the wireless LAN and the remaining battery level, through which to initiate or place a call.

The mobile terminal equipment of this embodiment allows the user to specify a user mode indicating how a communication channel should be selected. In this embodiment, the predetermined user mode is assigned the highest priority in selecting a communication channel. Three user modes are available. In an exclusive mobile-phone mode, the mobile phone network is always selected, and routing through the wireless LAN is not performed. In a mobile-phone first mode, routing through the wireless LAN is performed if the equipment is outside the service area of the mobile phone network. In a wireless-LAN first mode, routing through the wireless LAN is performed immediately when radio waves of the wireless LAN are detected.

With regard to selection of a communication channel, the second highest priority is given to the strength of radio waves received by the mobile terminal equipment of this embodiment after it enters the service area of the wireless LAN. For instance, if the strength of radio waves from an access point of the wireless LAN is lower than -100 dBm, the wireless LAN would not be used. If the radio strength is -100 dBm or higher, a communication channel through the wireless LAN would be used.

Moreover, an originating communication channel can be selected, depending on the current telephone charge within a certain period such as a base period for billing. If the mobile-phone first mode is selected and if the equipment can receive a sufficient signal from the mobile phone network (if the equipment displays some bars, depending on the strength of radio waves, at least one bar would be displayed on the screen in this case), routing through the wireless LAN will not be performed. If the maximum allowable mobile phone call charge (i.e.cost) is specified beforehand and if the limit is reached, an originating communication channel through the wireless LAN is used. For instance, if the monthly telephone charge reaches the limit of 10,000 yen, a communication channel through the wireless LAN would be used.

A communication channel can also be selected depending on the remaining battery level, when the wireless-LAN first mode is selected or when radio waves from a base station are weak in the mobile-phone first mode. Generally, a call through the wireless LAN consumes more power than a call through the mobile phone network. If the remaining battery level is low, a communication channel through the mobile phone network is used even though the user selects the wireless-LAN first mode. If the user selects the mobile-phone first mode and if radio waves from (signals detected by) the mobile phone are very weak or non-existent (if the equipment displays some bars, depending on the strength of radio waves, no bar would be displayed on the screen in this case), communication through the mobile phone network would not be stable. Then, if a sufficient signal can be received from the wireless LAN and if the remaining battery level is high enough, a communication channel through the wireless LAN would be used.

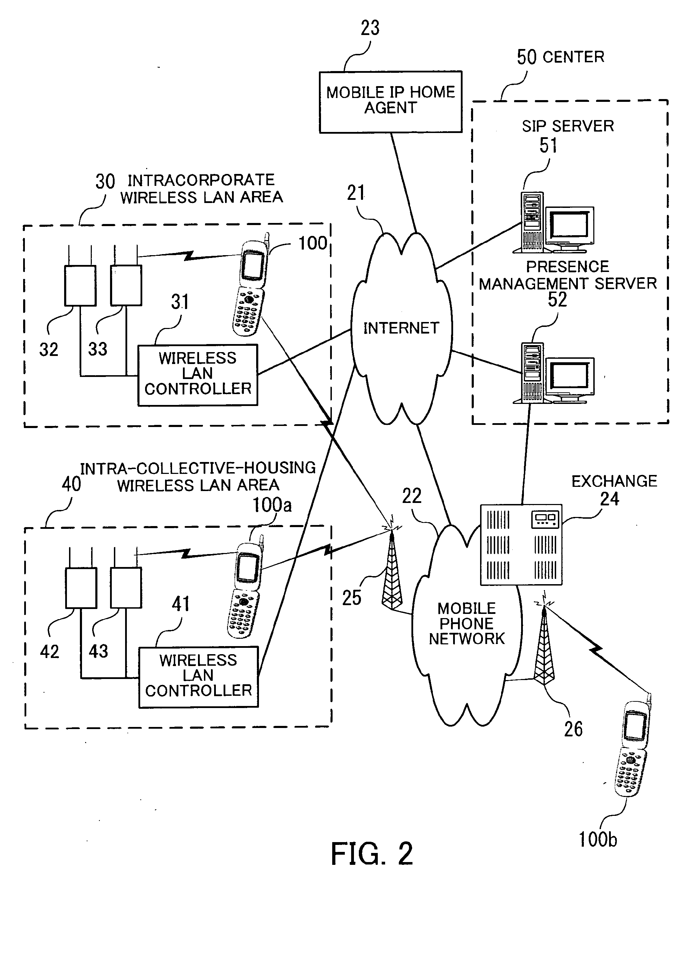

FIG. 2 shows one system configuration of this embodiment, which uses an Internet 21-connected wireless LAN and a mobile phone network 22 as communication media through which a voice call can be placed. Mobile terminal equipment 100, 100a, and 100b have a function to place a VoIP call through the wireless LAN and a function to call through the mobile phone network 22.

The Internet 21 is connected to a mobile IP home agent 23, which manages the current IP addresses of the mobile terminal equipment 100, 100a, and 100b, and others. The mobile IP home agent 23 receives a VoIP packet directed to the mobile terminal equipment 100, 100a, or 100b, converts the destination to the current IP address, and passes the packet to the mobile terminal equipment 100, 100a, or 100b.

The Internet 21 is also connected to a wireless LAN controller 31 disposed in an intracorporate wireless LAN area 30 and a wireless LAN controller 41 disposed in an intra-collective-housing wireless LAN area 40. The Internet 21 is further connected to a session initiation protocol (SIP) server 51 and a presence management server 52 disposed in a center 50. The SIP is a communication protocol for establishing, releasing, and controlling a session of VoIP communication. The SIP server 51 manages SIP communication through the Internet 21. The presence management server 52 sends a push button (PB) signal or another signal for routing an incoming call through a communication channel to an exchange 24, on a request from the mobile terminal equipment 100, 100a, or 100b.

The mobile phone network 22 is provided with the exchange 24. The exchange 24 connects a channel among the mobile terminal equipment 100, 100a, and 100b. The exchange 24 has a function to automatically route a call directed at a telephone number in the mobile phone network 22 to a predetermined telephone number. The mobile phone network 22 has base stations 25 and 26 as well. The base stations 25 and 26 allow wireless communication with the mobile terminal equipment 100, 100a, and 100b.

The intracorporate wireless LAN area 30 contains access points 32 and 33 connected to the wireless LAN controller 31. The access points 32 and 33 allow wireless communication with the mobile terminal equipment 100 entering the intracorporate wireless LAN area 30.

The intra-collective-housing wireless LAN area 40 contains access points 42 and 43 connected to the wireless LAN controller 41. The access points 42 and 43 allow communication with the mobile terminal equipment 100a entering the intra-collective-housing wireless LAN area 40.

The system configuration as described above allows a VoIP call through the Internet 21 and a call through the mobile phone network 22, among the mobile terminal equipment 100, 100a, and 100b. The channel used for a call among the mobile terminal equipment 100, 100a, and 100b is automatically selected.

A channel used to terminate (complete) a call to the mobile terminal equipment 100, 100a, and 100b is specified beforehand in the exchange 24, on a request from the mobile terminal equipment 100, 100a, and 100b.

A procedure for specifying the routing of an incoming call in the mobile terminal equipment 100 will next be described.

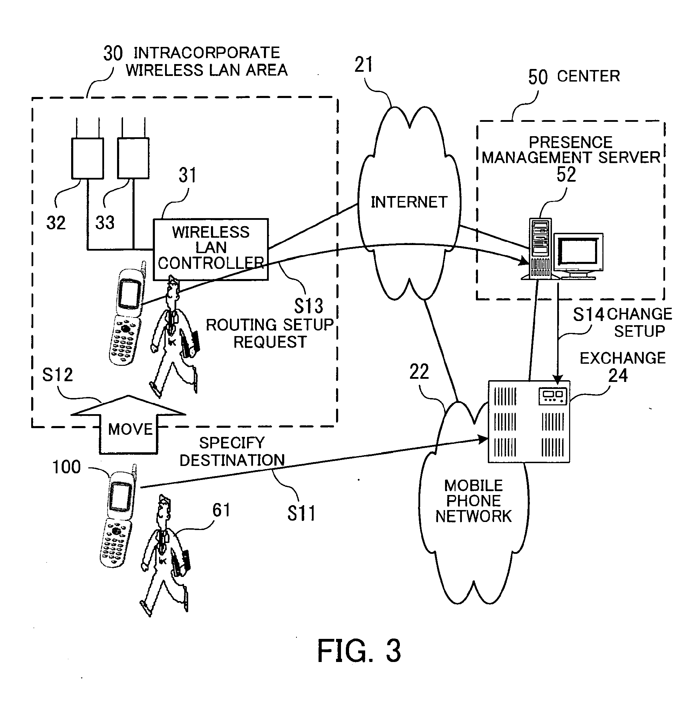

FIG. 3 shows the concept of terminating channel setup processing, illustrating a case where a user 61 holding the mobile terminal equipment 100 enters the intracorporate wireless LAN area 30, as an example.

Step S11: The user 61 operates the mobile terminal equipment 100 to specify a destination telephone number used for routing through the wireless LAN in the exchange 24. This telephone number can be specified through the mobile phone network 22. For instance, the user 61 makes a call from the mobile terminal equipment 100 to a telephone number specified by a carrier managing the mobile phone network 22. Then, the user can hear voice guidance explaining a configuration method specified by the carrier. The user 61 operates the mobile terminal equipment 100 to input the telephone number to be used for a call through the wireless LAN, following the voice guidance. The specified telephone number is associated with the telephone number of the mobile terminal equipment 100 to be used in the mobile phone network 22 and stored in the exchange 24.

Step S12: The user 61 carrying the mobile terminal equipment 100 enters the intracorporate wireless LAN area 30.

Step S13: The mobile terminal equipment 100 senses the access points 32 and 33 of the wireless LAN and performs routing setup processing. In the routing setup processing, a terminating channel is identified first. To be more specific, the mobile terminal equipment 100 checks the radio conditions of the wireless LAN, the remaining battery level, at least, and determines whether to receive an incoming call through the wireless LAN. If it is decided to receive an incoming call through the wireless LAN, the mobile terminal equipment 100 sends a routing setup request through the wireless LAN to the presence management server 52.

After the routing setup request is sent, the mobile terminal equipment 100 waits for a call coming through the wireless LAN and can disable a function to wait for a call coming through the mobile phone network.

Step S14: The presence management server 52 receives the routing setup request, accesses the exchange 24, and sets the routing setup flag to ON. For instance, the presence management server 52 accesses the exchange 24 through a modem, and gives the exchange 24 a signal (a certain sequence of PB signals) for setting the routing setup flag corresponding to the mobile terminal equipment 100 to ON. The exchange 24 sets the routing setup flag corresponding to the telephone number of the mobile terminal equipment 100 to ON.

Now, the setup is changed to automatically handle an incoming call as a VoIP call through the wireless LAN while the mobile terminal equipment 100 is in the service area of the wireless LAN. An incoming call directed at the telephone number of the mobile terminal equipment 100 in the mobile phone network is routed through the wireless LAN while the mobile terminal equipment 100 is in the service area of the wireless LAN.

Processing to be performed when a call is made to the mobile terminal equipment 100 after the routing setup for an incoming call is completed will next be described.

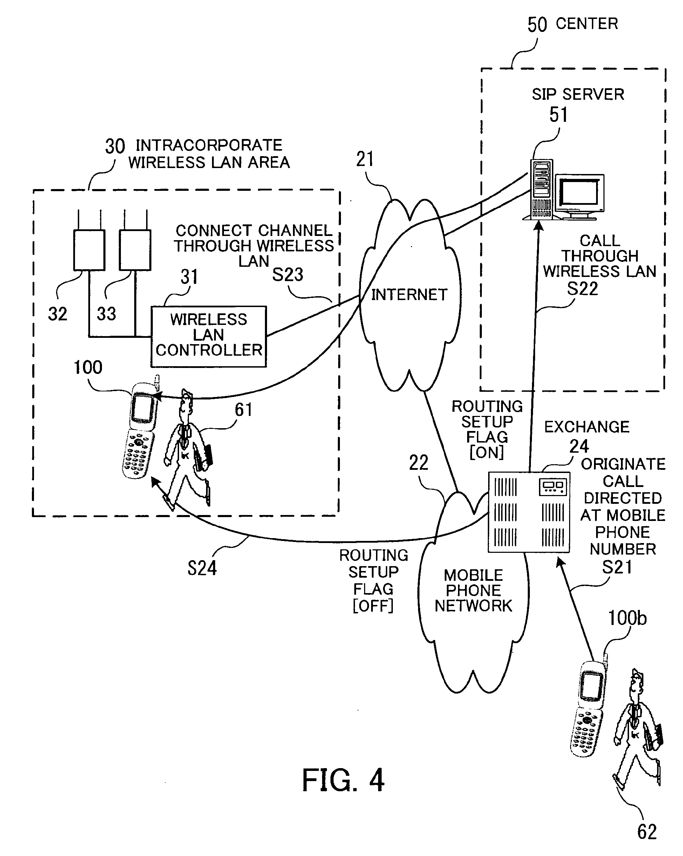

FIG. 4 shows channel connection processing to be performed when an incoming call is received, illustrating a case where a user 62 makes a call from the mobile terminal equipment 100b to the mobile terminal equipment 100.

Step S21: The user 62 makes a call from the mobile terminal equipment 100b to the mobile phone number of the mobile terminal equipment 100. The mobile phone number is passed to the exchange 24.

Step S22: The exchange 24 checks the routing setup flag corresponding to the mobile phone number. If the routing setup flag is ON, the exchange 24 asks the SIP server 51 to call the mobile terminal equipment 100 through the wireless LAN.

Step S23: The SIP server 51 calls the mobile terminal equipment 100 through the wireless LAN, as requested. When the user 61 answers the call, a VoIP communication channel through the wireless LAN is established between the mobile terminal equipment 100 and the mobile terminal equipment 100b.

Step S24: If the routing setup flag is OFF, the exchange 24 calls the mobile terminal equipment 100 through the mobile phone network 22. When the user 61 answers the call, a communication channel through the mobile phone network 22 is established between the mobile terminal equipment 100 and the mobile terminal equipment 100b.

The channel specified by the mobile terminal equipment 100 can be used as a terminating communication channel, as described above. The mobile terminal equipment 100 has a function to specify routing of an originating or terminating call through a communication channel. The function will next be described in further detail.

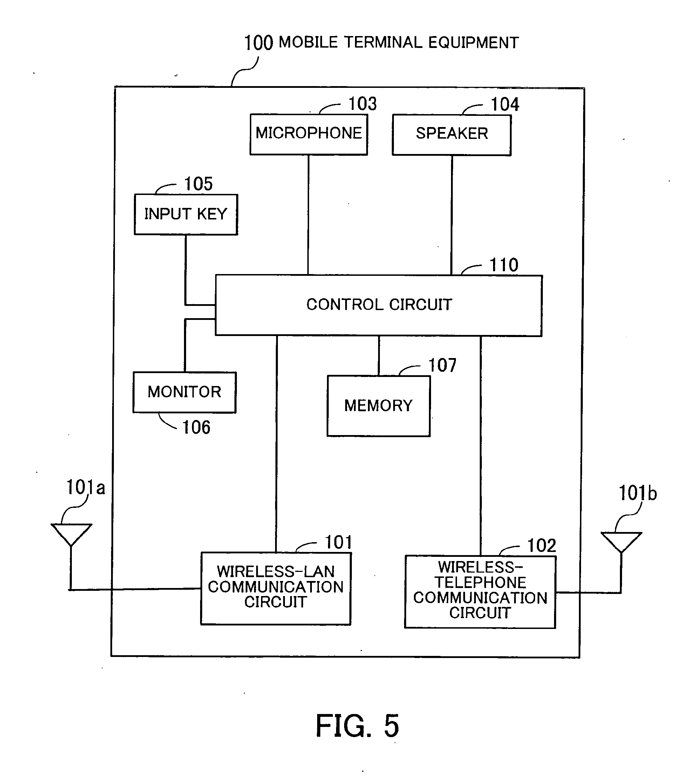

FIG. 5 shows a hardware configuration of the mobile terminal equipment. The mobile terminal equipment 100 is controlled by a control circuit 110. The control circuit 110 is connected to a wireless-LAN communication circuit 101, a wireless-telephone communication circuit 102, a microphone 103, a speaker 104, an input key 105, a monitor 106, and a memory 107.

The wireless-LAN communication circuit 101 performs wireless data communication with an access point of the wireless LAN through an antenna 101a. The wireless-telephone communication circuit 102 performs wireless data communication with a base station of the mobile phone network through an antenna 101b.

The microphone 103 passes sounds (e.g. the user's voice) to the control circuit 110. The speaker 104 outputs sounds based on audio data output from the control circuit 110.

The input key 105 includes a plurality of keys such as a numeric keypad. When any key is pressed, a corresponding signal is passed to the control circuit 110. The monitor 106 is a liquid crystal display unit, for instance, and displays image data sent from the control circuit 110.

The memory 107 stores programs describing the contents of processing to be executed by the control circuit 110, data necessary for the processing, and others. The programs stored in the memory 107 include a Java (registered trademark) applet downloaded through the Internet 21.

Functions implemented by the mobile terminal equipment 100 configured as described above will next be described.

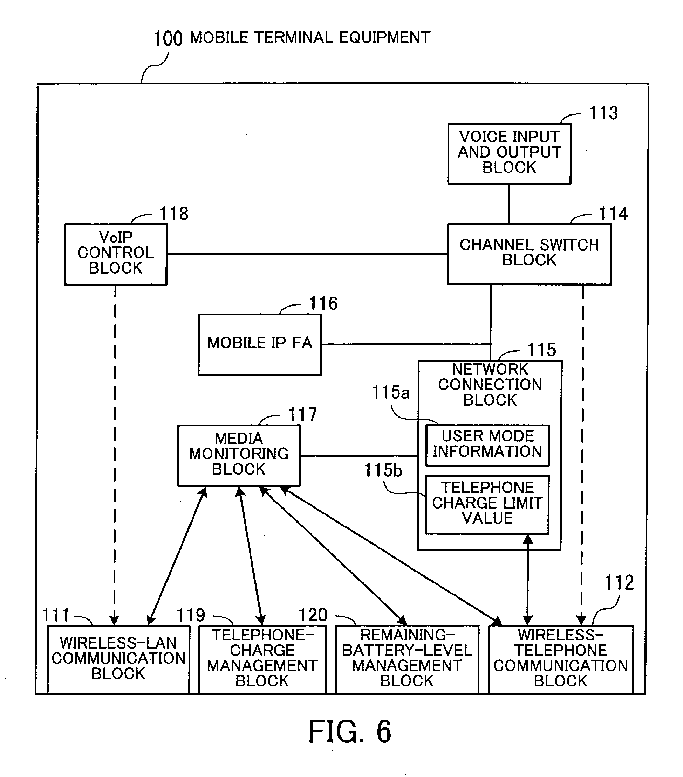

FIG. 6 is a block diagram showing the functions of the mobile terminal equipment. The mobile terminal equipment 100 includes a wireless-LAN communication block 111, a wireless-telephone communication block 112, a voice input and output block 113, a channel switch block 114, a network connection block 115, a mobile IP foreign agent (FA) 116, a media monitoring block 117, a VoIP control block 118, a telephone-charge management block 119, and a remaining-battery-level management block 120. These blocks are implemented by the control circuit 110 controlling the peripherals.

The wireless-LAN communication block 111 performs communication through the wireless LAN or the Internet 21. When the SIP server 51 connects a channel through the Internet 21, the wireless-LAN communication block 111 performs VoIP communication through the wireless LAN and the Internet 21.

The wireless-telephone communication block 112 performs communication through the mobile phone network 22. When the exchange 24 connects a channel to the other party such as mobile terminal equipment 100b, the wireless-telephone communication block 112 performs communication through the mobile phone network 22.

The voice input and output block 113 controls voice input from the microphone 103 and voice output to the speaker 104. To be more specific, the voice input and output block 113 converts an audio signal input from the microphone 103 to a digital signal and passes the digital signal to the channel switch block 114. The voice input and output block 113 also receives audio data from the channel switch block 114, converts the data to an analog audio signal, and causes sound (e.g. a voice) to be output from the speaker 104.

The channel switch block 114 activates the VoIP control block 118 and dials a telephone number on a user's call request. The channel switch block 114 selects a channel in accordance with the conditions of the wireless LAN and the mobile telephone network. The network connection block 115 passes an instruction to switch the channel.

When a communication channel through the wireless LAN is selected, the channel switch block 114 exchanges audio data with the VoIP control block 118. When a communication channel through the mobile phone network 22 is selected, the channel switch block 114 exchanges audio data with the wireless-telephone communication block 112.

The network connection block 115 includes user mode information 115a and a telephone charge limit value 115b. The user mode information 115a includes a criterion for selecting a communication channel. To be more specific, the user mode information 115a specifies whether a communication channel through the mobile telephone network is always selected; if not, whether a communication channel through the wireless LAN or a communication channel through the mobile telephone network is selected first. The network connection block 115 changes the contents of the user mode information 115a in accordance with a user's selection.

The telephone charge limit value 115b is a user-specified limit of the telephone charge of the mobile phone in a certain period. If the telephone charge of the certain period exceeds the user-specified limit, the network connection block 115 will first select communication through the wireless LAN for a subsequent originating call. The network connection block 115 changes the contents of the telephone charge limit value 115b in accordance with a user's operation input.

When a call is originated, the network connection block 115 checks the contents of the user mode information 115a and selects a channel in accordance with the information obtained by the media monitoring block 117. The type of the selected channel is reported to the channel switch block 114. The network connection block 115 also issues an operating instruction to the wireless-LAN communication block 111 and the wireless-telephone communication block 112. The instruction may be a standby instruction in the incoming-call wait state, an operation stop instruction, or a startup instruction, for instance.

When the media monitoring block 117 reports that the equipment has entered the service area of the wireless LAN, the network connection block 115 obtains the telephone charge, the remaining battery level, the radio conditions of the wireless LAN, the call conditions of the mobile phone network, and other information from the media monitoring block 117. Based on the information, the network connection block 115 judges whether a terminating communication channel through the wireless LAN is used. When the terminating communication channel through the wireless LAN is selected, the network connection block 115 sends a routing setup request to the presence management server 52.

The mobile IP foreign agent (FA) 116 supports LAN roaming. The mobile IP FA 116 works with the mobile IP home agent 23 on the network side to maintain a session when the LAN is connected. To be more specific, the mobile IP FA 116 reports the current position on a network through the wireless LAN to the mobile IP home agent 23. The position is represented by the identification information of an accessible access point of the wireless LAN and the like.

Internet Engineering Task Force (IETF), an Internet-related standardization organization, has standardized a system for enabling a transparent movement of a terminal on the Internet by the mobile IP FA 116 and the mobile IP home agent 23, shown in FIG. 2 (RFC2002). This system allows an original IP address to be used after a movement to a different subnet.

The media monitoring block 117 monitors the conditions of the network media. The media monitoring block 117 monitors the statuses of the wireless-LAN communication block 111, the wireless-telephone communication block 112, the telephone-charge management block 119, and the remaining-battery-level management block 120, and passes the conditions of the communication channels to the network connection block 115. To be more specific, the media monitoring block 117 receives information indicating the radio conditions of the wireless LAN from the wireless-LAN communication block 111, information indicating the radio conditions of the mobile phone network from the wireless-telephone communication block 112, the current telephone charge information from the telephone-charge management block 119, and information on the state of the battery from the remaining-battery-level management block 120.

The VoIP control block 118 performs VoIP audio data communication through the wireless-LAN communication block 111. To be more specific, the VoIP control block 118 receives audio data from the channel switch block 114, generates a VoIP packet, and passes the packet to the wireless-LAN communication block 111. The VoIP control block 118 also receives a VoIP packet from the wireless-LAN communication block 111, reproduces the original audio data, and passes the data to the channel switch block 114.

The telephone-charge management block 119 manages the mobile telephone charge of the mobile terminal equipment 100. For instance, the telephone-charge management block 119 obtains the telephone charge by multiplying a telephone rate per unit time by the total number of call units in a certain period and stores the telephone charge in the memory 107.

The remaining-battery-level management block 120 monitors the remaining battery level of the mobile terminal equipment 100. The remaining-battery-level management block 120 reports a numeric value indicating the state of the battery, such as the ratio of the current battery level to the fully charged condition expressed as a percentage, to the media monitoring block 117, on a request from the media monitoring block 117.

With these functions, the mobile terminal equipment 100 automatically sets up a terminating communication channel. Terminating channel determination processing will next be described in further detail.

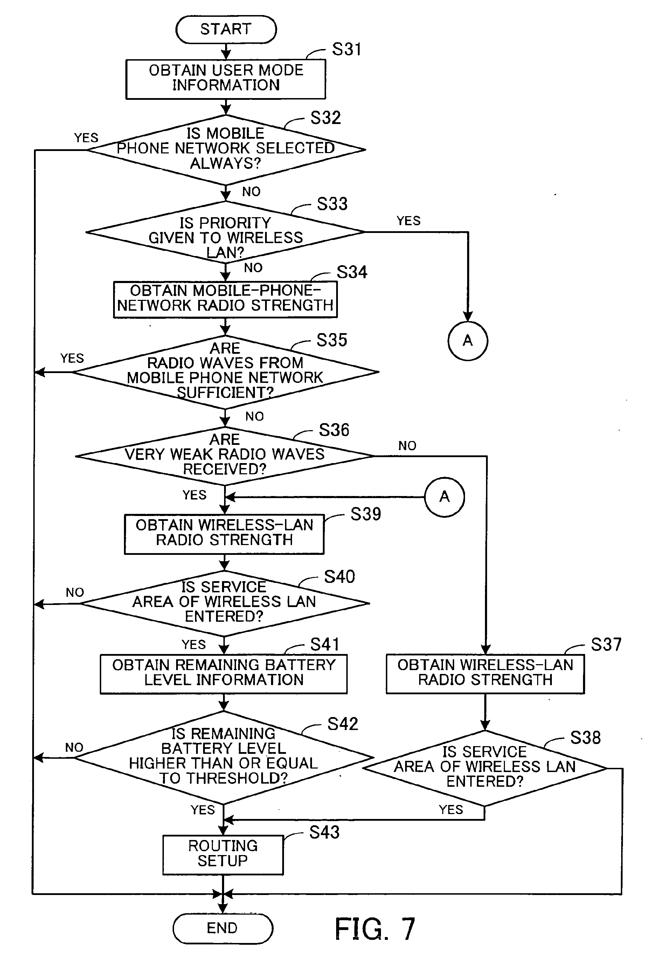

FIG. 7 is a flow chart showing terminating channel determination processing. Individual steps will be described in order of step number.

Step S31: When the media monitoring block 117 reports that the equipment has entered the service area of the wireless LAN, the network connection block 115 obtains the user mode information 115a.

Step S32: The network connection block 115 checks the user mode information 115a to see whether the mobile phone network 22 should be used always. If so, no routing setup request is output, and the processing ends. If not, the processing proceeds to step S33.

Step S33: The network connection block 115 checks the user mode information 115a to see whether the wireless LAN should be selected first. If so, the processing proceeds to step S39. If not, the network connection block 115 determines that the mobile phone network 22 should be selected first, and the processing proceeds to step S34.

Step S34: The network connection block 115 obtains information indicating the strength of radio waves sent by a base station of the mobile phone network 22, from the media monitoring block 117.

Step S35: The network connection block 115 checks whether the equipment is in the service area of the mobile phone network 22. To be more specific, the network connection block 115 determines that the equipment is in the service area if the signal from a base station of the mobile phone network 22 is strong enough to use. If the equipment is within the service area of the mobile phone network 22, no routing setup request is output, and the processing ends. If the equipment is beyond the service area of the mobile phone network 22, the processing proceeds to step S36.

Step S36: If the equipment is not determined to be within the service area in step S35, the network connection block 115 checks whether very weak radio waves are being received from a base station of the mobile phone network 22. If yes, the processing proceeds to step S39. If no radio waves are reaching, the processing proceeds to step S37.

Step S37: If no radio waves are being received from a base station of the mobile phone network 22, the network connection block 115 obtains information indicating the strength of radio waves sent by an access point of the wireless LAN, from the media monitoring block 117.

Step S38: The network connection block 115 checks whether the equipment is in the service area of the wireless LAN. To be more specific, the network connection block 115 determines that the equipment is within the service area if the strength of radio waves from an access point of the wireless LAN is higher than or equal to the lowest allowable level for connecting, e.g. -100 dBm. If the equipment is within the service area of the wireless LAN, the processing proceeds to step S43. If not, no routing setup request is output, and the processing ends.

Step S39: The network connection block 115 obtains information indicating the strength of radio waves sent by an access point of the wireless LAN, from the media monitoring block 117.

Step S40: The network connection block 115 checks whether the equipment is in the service area of the wireless LAN. To be more specific, the network connection block 115 determines that the equipment is in the service area if the strength of radio waves from an access point of the wireless LAN is higher than or equal to the lowest level for establishing a connection, e.g. -100 dBm. If the equipment is within the service area of the wireless LAN, the processing proceeds to step S41. If not, no routing setup request is output, and the processing ends.

Step S41: The network connection block 115 obtains information indicating the current battery level from the media monitoring block 117.

Step S42: The network connection block 115 checks whether the current battery level is higher than or equal to a certain level or a predetermined threshold. If one-third of the fully charged state is specified as the threshold, for instance, the network connection block 115 checks whether the current battery level is lower than one-third of the fully charged state. If the current battery level is higher than or equal to the threshold, the processing proceeds to step S43. If the current battery level is lower than the threshold, no routing setup request is output, and the processing ends.

Step S43: The network connection block 115 sends a request to specify routing through the wireless LAN to the presence management server 52. Then, the processing ends.

Whether to specify routing is determined in accordance with the user mode information, the strength of signal in the mobile phone network, the strength of signal in the wireless LAN, and the remaining battery life. If a channel through the mobile phone network is always selected, routing is not specified. If priority is given to the mobile phone network, a routing setup request is output when the equipment is receiving an insufficient signal from the mobile phone network beyond the service area of the mobile phone network and is within the service area of the wireless LAN and when the current battery level is higher than or equal to the threshold. A routing setup request is output also when the equipment is not detecting a signal from the mobile phone network and is within the service area of the wireless LAN. If priority is given to the wireless LAN, a routing setup request is output when the equipment is within the service area of the wireless LAN and when the current battery level is higher than or equal to the threshold.

When a routing setup request is output, the presence management server 52 gives the exchange 24 a signal issuing an instruction to specify routing. When a call directed to the mobile phone number of the mobile terminal equipment 100 is received, the exchange 24 starts a VoIP call to the mobile terminal equipment 100 through the wireless LAN. That is, although the mobile phone number of the mobile terminal equipment 100 is called, both parties can talk through the wireless LAN.

When the mobile terminal equipment 100 exits from the service area of the wireless LAN, the network connection block 115 recognizes the fact from the strength of radio waves of the wireless LAN monitored by the media monitoring block 117. Then, the network connection block 115 sends a routing reset request to the presence management server 52. In response to the routing reset request, the presence management server 52 outputs a signal (a certain sequence of PB signals, for instance) for resetting the routing request to the exchange 24. Now, the routing request is automatically cancelled.

When a routing setup request is sent, the mobile terminal equipment 100 can start the function to wait for a call coming through the wireless LAN of the wireless-LAN communication block 111 and can stop the function to wait for a call coming through the mobile phone network of the wireless-telephone communication block 112. When a routing reset request is sent, the mobile terminal equipment 100 can start the function to wait for a call coming through the mobile phone network of the wireless-telephone communication block 112 and can stop the function to wait for a call coming through the wireless LAN of the wireless-LAN communication block 111. Power consumption in the standby state can be reduced by stopping the function to receive a call coming through either communication channel, as described above.

Moreover, the mobile terminal equipment 100 automatically determines the originating channel to be used and sends a signal through the selected originating channel.

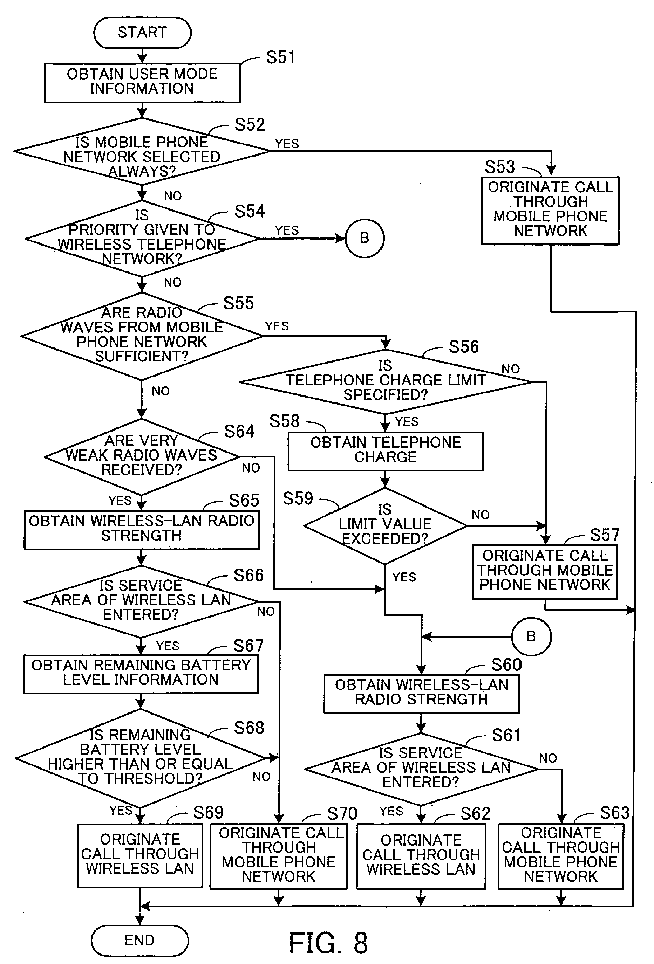

FIG. 8 is a flow chart showing the procedure of originating channel determination processing. Individual steps will be described in ascending order of step number.

Step S51: When a user's operation to originate a call is input, the network connection block 115 obtains the user mode information 115a.

Step S52: The network connection block 115 checks the user mode information 115a to see whether the mobile phone network 22 should be used always. If so, the processing proceeds to step S53. If not, the processing proceeds to step S54.

Step S53: The network connection block 115 determines that a channel through the mobile phone network 22 is used to originate (place) a call, and gives the channel switch block 114 an instruction to select a channel through the mobile phone network. The wireless-telephone communication block 112 originates a call through the mobile phone network 22. Then, the processing ends.

Step S54: The network connection block 115 checks the user mode information 115a to see whether the wireless LAN should be used first. If so, the processing proceeds to step S60**.** If not, the network connection block 115 determines that the mobile phone network 22 should be selected first, and the processing proceeds to step S55.

Step S55: The network connection block 115 checks whether the equipment is in the service area of the mobile phone network 22. To be more specific, the network connection block 115 determines that the equipment is in the service area of the mobile phone network 22 if the strength of radio waves from a base station of the mobile phone network 22 is higher than or equal to the lowest allowable level for use. If the equipment is in the service area of the mobile phone network 22, the processing proceeds to step S56. If the equipment is beyond the service area of the mobile phone network 22, the processing proceeds to step S64.

Step S56: The network connection block 115 checks whether the telephone charge limit value 115b specifies a limit of the telephone charge. If so, the processing proceeds to step S58. If not, the processing proceeds to step S57.

Step S57: If priority is given to the mobile phone network and if a telephone charge limit value is not specified, the network connection block 115 determines that an originating channel through the mobile phone network 22 is used. The network connection block 115 gives the channel switch block 114 an instruction to route a call through the mobile phone network. Then, the wireless-telephone communication block 112 originates a mobile phone call through the mobile phone network 22, and the processing ends.

Step S58: If a telephone charge limit value is specified, the network connection block 115 obtains information indicating the current telephone charge from the media monitoring block 117.

Step S59: The network connection block 115 compares the current telephone charge and the telephone charge limit value. If the current telephone charge is lower than the limit value, the processing proceeds to step S57, and a call is originated through the mobile phone network 22. If the current telephone charge is higher than or equal to the limit value, the processing proceeds to step S60.

Step S60: The network connection block 115 obtains information indicating the strength of radio waves sent by the wireless LAN, from the media monitoring block 117.

Step S61: The network connection block 115 checks whether the equipment is in the service area of the wireless LAN. For instance, the equipment is determined to be within the service area if the radio strength is -100 dBm or higher, and the equipment is determined to be beyond the service area if the radio strength is lower than -100 dBm. If the equipment is within the service area of the wireless LAN, the processing proceeds to step S62. If the equipment is beyond the service area of the wireless LAN, the processing proceeds to step S63.

Step S62: The network connection block 115 determines that an originating channel through the wireless LAN is used, and gives the channel switch block 114 an instruction to select a channel through the wireless LAN. Then, the wireless-telephone communication block 112 originates a call through the wireless LAN, and the processing ends.

Step S63: The network connection block 115 determines that an originating channel through the mobile phone network 22 is used, and gives the channel switch block 114 an instruction to select a channel through the mobile phone network. Then, the wireless-telephone communication block 112 originates a call through the mobile phone network 22, and the processing ends.

Step S64: If the equipment is determined to be beyond the service area in step S55, the network connection block 115 checks whether little or no signal is received from a base station of the mobile phone network 22. If so, the processing proceeds to step S65. If not, the processing proceeds to step S60, and whether a call should be originated through the wireless LAN is determined.

Step S65: If very weak radio waves are received from a base station of the mobile phone network 22, the network connection block 115 obtains information indicating the strength of radio waves sent by the wireless LAN, from the media monitoring block 117.

Step S66: The network connection block 115 determines whether the equipment is within the service area of the wireless LAN. If so, the processing proceeds to step S67. If not, the processing proceeds to step S70.

Step S67: The network connection block 115 obtains information indicating the battery level from the media monitoring block 117.

Step S68: The network connection block 115 determines whether the remaining battery life is higher than or equal to a predetermined level, such as one-third of the fully charged state. If so, the processing proceeds to step S69. If not, the processing proceeds to step S70.

Step S69: The network connection block 115 determines that an originating channel through the wireless LAN is used, and gives the channel switch block 114 an instruction to select a channel through the wireless LAN. Then, the wireless-telephone communication block 112 originates a call through the wireless LAN, and the processing ends.

Step S70: The network connection block 115 determines that an originating channel through the mobile phone network 22 is used, and gives the channel switch block 114 an instruction to select a channel through the mobile phone network. Then, the wireless-telephone communication block 112 originates a call through the mobile phone network 22, and the processing ends.

An appropriate originating communication channel can be selected in accordance with the user mode information, the strength of radio waves from a base station of the mobile phone network, the strength of radio waves from an access point of the wireless LAN, and the telephone charge, as described above.

In the processing shown in FIG. 8, if the user mode information indicates that priority is given to the wireless LAN, a channel is selected independently of the remaining battery level. This is because limiting the telephone charge up to a certain level takes priority over extending the talk time by reducing the power consumption. If extending the talk time is given higher priority, a communication channel can be selected in accordance with the remaining battery level information.

To be more specific, if the network connection block 115 recognizes in step S54 that the wireless LAN should be selected first, the procedure is changed to go to step S66. Then, when the user mode information indicates that priority is given to the wireless LAN and when the equipment is determined to be within the service area of the wireless LAN, a channel through the wireless LAN is selected if the remaining battery level is higher than or equal to a predetermined level. If the remaining battery level is lower than the predetermined level, a channel through the mobile phone network is selected.

In this embodiment, the mobile terminal equipment selects the terminating channel. The presence management server may also select the terminating channel. In that case, when the mobile terminal equipment 100 enters the service area of the wireless LAN, the radio conditions from a base station of the mobile phone network 22, the radio conditions from an access point-of the wireless LAN, and the remaining battery level information are sent to the presence management server 52. The presence management server 52 executes processing similar to the processing described in FIG. 7, in accordance with the received information. In a step corresponding to step S42 shown in FIG. 7, the presence management server 52 accesses the exchange 24 and performs processing to change the routing setup flag to ON. This allows the presence management server 52 to select a terminating channel.

In the embodiment described above, the presence management server 52 outputs a routing setup signal to the exchange 24. The routing setup signal may also be sent from the mobile terminal equipment 100 to the exchange 24.

If the mobile terminal equipment 100 contains a CPU, the CPU can implement the processing performed by the network connection block 115 of the mobile terminal equipment 100. In that case, a program describing the contents of the processing performed by the network connection block 115 is provided. When the CPU executes the program, the corresponding function is implemented on the mobile terminal equipment 100. The program describing the contents of the processing can be recorded on a computer-readable recording medium. Computer-readable recording media include magnetic recording apparatuses, optical discs, magneto-optical recording media, and semiconductor memory. Magnetic recording apparatuses include a hard disk drive (HDD), a flexible disk (FD), and a magnetic tape. Optical discs include a digital versatile disk (DVD), a DVD random access memory (DVD-RAM), a compact disk read only memory (CD-ROM), a CD recordable (CD-R), and a CD rewritable (CD-RW). Magneto-optical recording media include a magneto-optical disk (MO).

The program is distributed in the form of portable recording medium storing the program, such as a DVD and a CD-ROM. The program can also be stored in a storage apparatus of a server computer and can be transferred from the server computer through a network to the mobile terminal equipment 100. For instance, a Java (registered trademark) applet is stored in a server computer, and mobile terminal equipment such as a mobile phone can download the program through the mobile phone network 22 or the like.

The CPU for executing the program stores the program recorded on a portable recording medium or the program transferred from the server computer, in a storage apparatus of the mobile terminal equipment 100. Then, the CPU reads the program from the storage apparatus of the mobile terminal equipment 100 and executes the processing in accordance with the program. The CPU can also read the program directly from the portable recording medium and can execute the processing in accordance with the program. Each time a program is transferred from the server computer, the CPU can perform the processing in accordance with the program.

In a first mode of the embodiment, a a routing setup request for routing an incoming call directed at the mobile phone number of a mobile terminal equipment through the wireless LAN is output when the equipment enters the service area of the wireless LAN and when it is determined that the remaining battery level is higher than or equal to a predetermined level. Therefore, an appropriate terminating communication channel can be selected in accordance with the radio conditions of the wireless LAN and the remaining battery level.

In a second mode of the embodiment, when a telephone number is input to originate a call, if the equipment is within the service area of the wireless LAN and if the remaining battery level is higher than or equal to a predetermined level, the call-via-wireless-LAN section is given an origination instruction. Therefore, an appropriate originating communication channel can be selected in accordance with the radio conditions of the wireless LAN and the remaining battery level.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications are included which fall within the scope of the appended claims. For example, the present invention can also be applied to a case in which a wireless LAN communication channel consumes less power than an available wireless telephone communication channel.

## Claims

1. A mobile terminal control program for controlling a mobile terminal equipment comprising a call-via-wireless-LAN means operable to receive a call through a wireless local area network (LAN) and a call-via-wireless-telephone-network means operable to receive a call through a wireless telephone network, the mobile terminal control program causing a CPU of the mobile terminal equipment to function as:
a wireless-LAN service area determination means for obtaining wireless-LAN radio strength information indicating the strength of radio waves received from an access point of the wireless LAN from the call-via-wireless-LAN means, and for determining that the equipment has entered the service area of the wireless LAN if the wireless-LAN radio strength information indicates that the radio strength is higher than or equal to a certain level;
a communication channel selection means for obtaining remaining battery level information indicating the state of a battery of the mobile terminal from a battery management circuit for managing the battery if the wireless-LAN service area determination means determines that the equipment has entered the service area of the wireless LAN, and for selecting a communication channel through the wireless LAN as a receiving communication channel based on the remaining battery level information; and
a routing setup request means for giving a unit for managing a channel routing setup a routing setup request to route an incoming call to the mobile terminal equipment for communication through the wireless telephone network to a communication channel through the wireless LAN if the communication channel selection means selects the communication channel through the wireless LAN.

2. The mobile terminal control program according to claim 1, further causing the CPU to function as:
a mode management means for receiving an operation input for selecting whether priority is given to a communication channel through the wireless telephone network or to a communication channel through the wireless LAN, and for storing mode information indicating a selected communication channel;
the communication channel selection means obtaining wireless-telephone-network radio strength information indicating the strength of radio waves received from a base station of the wireless telephone network from the call-via-wireless-telephone-network means if the mode information indicates that priority is given to the wireless telephone network, and selecting a communication channel through the wireless telephone network as a receiving communication channel if the wireless-telephone-network radio strength information indicates that the radio strength is higher than or equal to a certain level.

3. A mobile terminal control program for controlling a mobile terminal equipment comprising a call-via-wireless-LAN means operable to place a call through a wireless LAN and a call-via-wireless-telephone-network means operable to place a call through a wireless telephone network, the mobile terminal control program causing a CPU of the mobile terminal equipment to function as:
a wireless-LAN service area determination means for obtaining wireless-LAN radio strength information indicating the strength of radio waves received from an access point of the wireless LAN from the call-via-wireless-LAN means when a telephone number is input to originate a call, and for determining whether the equipment is in the service area of the wireless LAN, depending on whether the wireless-LAN radio strength information indicates that the radio strength is higher than or equal to a certain level;
a communication channel selection means for obtaining remaining battery level information indicating the remaining battery level from a battery management circuit for managing the battery if the wireless-LAN service area determination means determines that the equipment is in the service area of the wireless LAN, and for selecting a communication channel through the wireless LAN as an originating communication channel if the remaining battery level information indicates that the remaining battery level is higher than or equal to a certain level, and for selecting a communication channel through the wireless telephone network as an originating communication channel if the remaining battery level information indicates that the remaining battery level is lower than the certain level; and
an origination control means for giving an origination instruction to the call-via-wireless-telephone-network means if the communication channel selection means selects a communication channel through the wireless telephone network, and giving an origination instruction to the call-via-wireless-LAN means if a communication channel through the wireless LAN is selected.

4. The mobile terminal control program according to claim 3, further causing the CPU to function as:
a mode management means for receiving an operation input for selecting whether priority is given to a communication channel through the wireless telephone network or a communication channel through the wireless LAN, and for storing mode information indicating a selected communication channel;
the communication channel selection means obtaining telephone charge information indicating the current telephone charge from a telephone charge management means for managing the telephone charge if the mode information indicates that priority is given to the wireless telephone network, and selecting a communication channel through the wireless telephone network as an originating communication channel if the telephone charge information indicates that a certain limit value is not exceeded.

5. Mobile terminal equipment for wireless communication, comprising:
a call-via-wireless-LAN means operable to receive a call through a wireless LAN;
a call-via-wireless-telephone-network means operable to receive a call through a wireless telephone network;
a wireless-LAN service area determination means for obtaining wireless-LAN radio strength information indicating the strength of radio waves received from an access point of the wireless LAN from the call-via-wireless-LAN means, and for determining that the equipment has entered the service area of the wireless LAN if the wireless-LAN radio strength information indicates that the radio strength is higher than or equal to a certain level;
a communication channel selection means for obtaining remaining battery level information indicating the remaining battery level from a battery management circuit for managing the battery if the wireless-LAN service area determination means determines that the equipment has entered the service area of the wireless LAN, and for selecting a communication channel through the wireless LAN as a receiving communication channel if the remaining battery level information indicates that the remaining battery level is higher than or equal to a certain level; and
a routing setup request means for giving a unit for managing a channel routing setup a routing setup request for routing an incoming call directed to the mobile terminal equipment for communication through the wireless telephone network to a communication channel through the wireless LAN if the communication channel selection means selects the communication channel through the wireless LAN.

6. Mobile terminal equipment for wireless communication, comprising:
a call-via-wireless-LAN means operable to originate a call through a wireless LAN;
a call-via-wireless-telephone-network means operable to originate a call through a wireless telephone network;
a wireless-LAN service area determination means for obtaining wireless-LAN radio strength information indicating the strength of radio waves sent by an access point of the wireless LAN from the call-via-wireless-LAN means when a telephone number is input to originate a call, and for determining whether the equipment is in the service area of the wireless LAN, depending on whether the wireless-LAN radio strength information indicates that the radio strength is higher than or equal to a certain level;
a communication channel selection means for obtaining remaining battery level information indicating the remaining battery level from a battery management circuit for managing the battery if the wireless-LAN service area determination means determines that the equipment is in the service area of the wireless LAN, and for selecting a communication channel through the wireless LAN as an originating communication channel if the remaining battery level information indicates that the remaining battery level is higher than or equal to a certain level, and for selecting a communication channel through the wireless telephone network as an originating communication channel if the remaining battery level information indicates that the remaining battery level is lower than the certain level; and
an origination control means for giving an origination instruction to the call-via-wireless-telephone-network means if the communication channel selection means selects a communication channel through the wireless telephone network, and for giving an origination instruction to the call-via-wireless-LAN means if a communication channel through the wireless LAN is selected.

7. A mobile terminal control method for controlling mobile terminal equipment comprising a call-via-wireless-LAN means operable to receive a call through a wireless LAN and a call-via-wireless-telephone-network means operable to receive a call through a wireless telephone network, the mobile terminal control method comprising:
a wireless-LAN service area determining step of obtaining wireless-LAN radio strength information indicating the strength of radio waves received from an access point of the wireless LAN from the call-via-wireless-LAN means, and determining that the equipment has entered the service area of the wireless LAN if the wireless-LAN radio strength information indicates that the radio strength is higher than or equal to a certain level;
a communication channel selecting step of obtaining remaining battery level information indicating the state of a battery of the mobile equipment from a battery management circuit for managing the battery if, in the wireless-LAN service area determining step, it is determined that the equipment has entered the service area of the wireless LAN, and selecting a communication channel through the wireless LAN as a receiving communication channel based on the remaining battery level information; and
a routing setup request step of giving a unit for managing a channel routing setup a routing setup request to route an incoming call directed at the mobile terminal equipment for communication through the wireless telephone network to a communication channel through the wireless LAN if, in the communication channel selecting step, the communication channel through the wireless LAN is selected.

8. A mobile terminal control method for controlling mobile terminal equipment comprising a call-via-wireless-LAN means operable to initiate a call through a wireless LAN and a call-via-wireless-telephone-network means operable to initiate a call through a wireless telephone network, the mobile terminal control method comprising
a wireless-LAN service area determining step of obtaining wireless-LAN radio strength information indicating the strength of radio waves received from an access point of the wireless LAN from the call-via-wireless-LAN means when a telephone number is input to originate a call, and determining whether the equipment is in the service area of the wireless LAN, depending on whether the wireless-LAN radio strength information indicates that the radio strength is higher than or equal to a certain level;
a communication channel selection step of obtaining remaining battery level information indicating the remaining battery level from a battery management circuit for managing the battery if, in the wireless-LAN service area determining step, it is determined that the equipment is in the service area of the wireless LAN, and selecting a communication channel through the wireless LAN as an originating communication channel if the remaining battery level information indicates that the remaining battery level is higher than or equal to a certain level, and selecting a communication channel through the wireless telephone network as an originating communication channel if the remaining battery level information indicates that the remaining battery level is lower than the certain level; and
an origination control step of giving an origination instruction to the call-via-wireless-telephone-network means if a communication channel through the wireless telephone network is selected, and giving an origination instruction to the call-via-wireless-LAN means if a communication channel through the wireless LAN is selected.

9. A recording medium storing a mobile terminal control program according to any of claims 1 to 4.
